# EUROPÄISCHE PATENTSCHRIFT

(11) **EP 0 534 899 B1**
(45) Veröffentlichungstag und Bekanntmachung des Hinweises auf die Patenterteilung: **29.04.1998**
(21) Anmeldenummer: 92810657.4
(22) Anmeldetag: 27.08.1992
(51) Int. Cl.: B61C 9/44, F16D 3/68

(54) **Antrieb für einen Radsatz eines Schienentriebfahrzeuges und Federelement für einen derartigen Antrieb**
Drive for a wheelset of a railway traction unit and a spring element for such a drive
Entraînement pour un train de roues d'un engin de traction ferroviaire et élément de ressort pour tel entraînement

(30) Priorität: 26.09.1991 CH 2858/91
(43) Veröffentlichungstag der Anmeldung: 31.03.1993
(73) Patentinhaber: SLM Schweizerische Lokomotiv- und Maschinenfabrik AG, CH-8401 Winterthur (CH)
(72) Erfinder: Kofmel, Peter, CH-8134 Adliswil (CH); Cortesi, Alberto, CH-8547 Gachnang (CH)
(74) Vertreter: Trieblnig, Adolf

(56) Entgegenhaltungen:
- DE-A- 1 455 047
- DE-C- 3 843 496
- GB-A- 1 028 352

## Beschreibung

Die Erfindung betrifft einen Antrieb für einen Radsatz eines Schienentriebfahrzeuges entsprechend dem Oberbegriff des Patentanspruchs 1.

Ferner betrifft die Erfindung ein Schienentriebfahrzeug mit mindestens einem derartigen Antrieb.

Bei einem aus der GB-PS 1 463 333 bekannten Antrieb der genannten Art, welcher einen Fahrmotor und zwei je einem Radsatz zugeordnete Winkelgetriebe enthält, sind die Federelemente der Kupplungseinrichtungen durch im wesentlichen rechteckförmige, in Umfangsrichtung hauptsächlich auf Druck beanspruchte Federkörper gebildet, welche je mit zwei beidenends anvulkanisierten ebenen Stützplatten versehen und unter Vorspannung zwischen zwei einander entgegengerichteten, in axialer Richtung parallel zueinander verlaufenden Anlegeflächen von Mitnehmerteilen angeordnet sind, von denen jeweils der eine mit einer die Radsatzachse umgebenden Kardanhohlwelle, und der andere mit einer Hohlwelle des Getriebes bzw. mit dem betreffenden Radsatz verbunden ist.

Ein aus der DE 38 43 496 C1 bekannter Antrieb enthält einen Fahrmotor, zwei Winkelgetriebe und zwei Paar elastische Kupplungen mit Federelementen, über welche der Motor auf zwei Radsatzachsen abgestützt ist. Die Federelemente sind durch keilförmige Federkörper gebildet, welche je mit zwei beidenends anvulkanisierten, gegen die Radsatzachse konvergierenden äusseren Metallteilen versehen sind. Diese wirken über zueinander konvergierende, entgegengesetzt konkav gekrümmte Stützflächen mit zwei entsprechenden, in Achsrichtung der Kupplung entgegengesetzt konvex gekrümmten Anlageflächen zusammen, welche an den einander in Umfangsrichtung benachbarten Mitnehmerteilen mit je annähernd radial zur Radsatzachse verlaufenden Scheitelpartien ausgebildet sind, die in einer senkrecht zur Radsatzachse verlaufenden Ebene angeordnet sind. Die bekannten Federkörper sind zudem je durch mindestens eine zur Radsatzachse radial gestellte, einvulkanisierte ebene Zwischenplatte unterteilt, welche mit den äusseren Metallteilen keilförmige Gummielemente mit unterschiedlichen Dicken begrenzt, wobei die grösste Dicke jeweils in den Aussenbereichen vorhanden sein soll, in denen die grösste Belastung der bei diesem bekannten Antrieb durch das Gewicht des Antriebsaggregates und durch die Massenbeschleunigung im Fahrbetrieb beanspruchten Federelemente auftritt.

Die Federkörper der bekannten Antriebe ergeben jeweils eine in radialer und in axialer Richtung relativ weiche Kupplungseinrichtung, welche, besonders bei in tangentialer Richtung weicher Ausführung, entsprechend grosse radiale Auslenkungen der gekuppelten Teile zulässt und welche daher nur innerhalb eines begrenzten, bei bisherigen Ausführungen üblichen Drehzahlbereichs eine annähernd konzentrische, nachgiebige Verbindung zwischen den gekuppelten Teilen gewährleistet. Diese bekannten Antriebe sind daher für schnellaufende Fahrzeuge, etwa Lokomotiven, die für eine Höchstgeschwindigkeit von z.B. über 200 km/h ausgelegt sind, weniger geeignet, da aufgrund der aus derartigen Geschwindigkeiten resultierenden grossen Fliehkräfte unzulässig hohe Beanspruchungen der bekannten Federelemente bzw. erhebliche Unwuchten auftreten können, die zu einem unruhigen Lauf des Triebfahrzeuges führen können.

Der Erfindung liegt die Aufgabe zugrunde, einen insbesondere in dieser Hinsicht verbesserten Antrieb der eingangs genannten Gattung mit einer Kupplungseinrichtung zu schaffen, welche eine in axialer Richtung relativ weiche und in Umfangsrichtung sowie in radialer Richtung relativ harte nachgiebige Verbindung zwischen den Antriebsteilen gewährleistet und welche auch bei wesentlich höheren als den bisher üblichen Fahrgeschwindigkeiten eine durch die auftretenden Fliehkräfte im wesentlichen unbeeinflusste Torsionselastizität aufweist und eine entsprechend unbeeinträchtigte Ubertragung des Drehmoments gewährleistet.

Diese Aufgabe wird erfindungsgemäss mit den kennzeichnenden Merkmalen des Anspruchs 1 gelöst.

Durch die erfindungsgemäss winkelförmig ausgebildeten und mit parallel zur Radsatzachse verlaufenden Scheitelpartien angeordneten Federelemente wird das Drehmoment durch Druck-/Schubbeanspruchung der in Umfangsrichtung hoch belastbaren, relativ steifen Federkörper übertragen, welche in axialer Richtung der Hohlwelle relativ grosse Schubdeformationen aufnehmen und dadurch entsprechend grosse axiale, radiale und kardanische Auslenkungen des Radsatzes zulassen. Die radialen und kardanischen Auslenkungen des Radsatzes werden durch kardanische Auslenkungen der zusammenwirkenden Kupplungsteile an den Hohlwellenenden bzw. durch axiale Deformation der einzelnen Federkörper ermöglicht. Die erfindungsgemäss ausgebildeten und angeordneten Federelemente weisen insbesondere eine relativ hohe Eigensteifigkeit in radialer Richtung auf, da jeweils zumindest ein Teil der über die abgewinkelten, schrägen Anlegeflächen und Stützflächen eingeleiteten Komponenten der Fliehkräfte durch Druckbeanspruchung der Federkörper übertragbar ist. Entsprechend wird eine in radialer Richtung relativ harte Kupplungseinrichtung am Hohlwellenende erzielt, welche auch bei den bei Antrieben für hohe Fahrgeschwindigkeiten auftretenden hohen Zentrifugalbeschleunigungen eine sichere Uebertragung des Drehmoments gewährleistet. In axialer Richtung und somit auch bei kardanischen Auslenkungen wird hingegen eine relativ weiche Verbindung zwischen Hohlwelle und Radsatz bzw. Hohlwelle und Getriebe erzielt, so dass der Radsatz axiale, radiale und kardanische Auslenkungen relativ zum Getriebe ohne Einwirkung grosser Rückstellkräfte ausführen kann.

Winkelförmige Federelemente mit Gummikörpern und winkelförmig ausgebildeten Versteifungs- und Stützteilen sind an sich bekannt. Bei einem aus der US-A-4,237,791 bekannten Drehgestell mit einem auf den Achslagern zweier Radsätze gefedert abgestützten Drehgestellrahmen sind die Achslager je über zwei derartige, quer zur Radsatzachse gestellte, in Drehgestell-Längsrichtung paarweise entgegengesetzt gerichtete Federkörper mit dem Drehgestellrahmen gekoppelt. Die Federelemente sind je zwischen einer am Achslager ausgebildeten, V-förmig abgewinkelten konvexen Anlagefläche und einer am Drehgestellrahmen ausgebildeten, entsprechend V-förmig abgewinkelten konkaven Anlagefläche angeordnet, wobei die beiden Anlageflächen des Achslagers und diejenigen des Drehgestellrahmens mit je paarweise nach oben konvergierenden Scheitelpartien ausgeführt sind, die in einer quer zur Radsatzachse verlaufenden Ebene liegen. Mit dieser bekannten Stützanordnung sollen horizontale Ausdrehbewegungen der Radsatzachse relativ zum Drehgestellrahmen durch Schubbeanspruchung der V-förmig angeordneten Gummielemente in Drehgestell-Längsrichtung ermöglicht werden. Die bekannte Stützanordnung ist somit weder hinsichtlich der zu lösenden Aufgabe noch hinsichtlich der Anordnung der Federelemente bezüglich der Radsatzachse mit dem erfindungsgemäss ausgebildeten Antrieb der eingangs genannten Gattung vergleichbar.

In den abhängigen Patentansprüchen sind vorteilhafte Weiterbildungen des Erfindungsgegenstandes angegeben.

Weitere Einzelheiten und Merkmale ergeben sich aus der folgenden Beschreibung eines in der Zeichnung schematisch dargestellten Ausführungsbeispiels nach der Erfindung, in Verbindung mit den Patentansprüchen. Es zeigen:
- Fig. 1: einen Antrieb eines Schienenfahrzeugs in einem axialen Teilschnitt;
- Fig. 2: eine Teilansicht mit Teilschnitt des Antriebes gemäss Pfeil II in Fig. 1;
- Fig. 3: ein Federelement des Antriebes in einer der Fig. 2 entsprechenden, grösseren Darstellung.

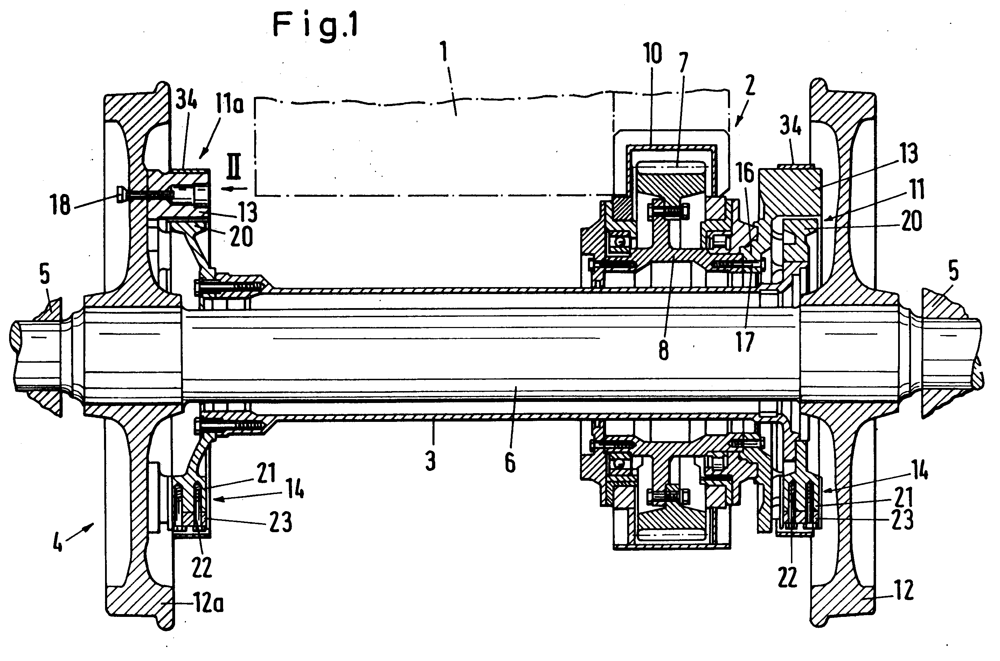

Der in Fig. 1 dargestellte Antrieb enthält einen Fahrmotor 1, der über ein Getriebe 2 und eine Hohlwelle 3 mit einem Radsatz 4 eines Schienenfahrzeuges, beim dargestellten Beispiel einer Lokomotive für Fahrgeschwindigkeiten von über 200 km/h, gekuppelt ist. Der Fahrmotor 1 ist in einem nicht dargestellten Drehgestell angeordnet, welches gefedert über Lager 5 auf einer Achse 6 des Radsatzes 4 abgestützt ist und welches einen weiteren, nicht dargestellten Fahrmotor enthält, der in entsprechender Weise mit einem zweiten, nicht dargestellten Radsatz gekuppelt ist. Das Getriebe 2 enthält ein auf der Motorwelle angeordnetes, nicht dargestelltes Ritzel und ein Zahnrad 7, welches mit dem Ritzel - oder einem damit kämmenden, nicht dargestellten Zwischenrad - in Eingriff ist und welches drehfest mit einem Hohlwellenstummel 8 verbunden ist, der in einem mit dem Gehäuse des Fahrmotors 1 fest verbundenen Getriebegehäuse 10 drehbar gelagert ist. Der Hohlwellenstummel 8 ist über eine Kupplungseinrichtung 11, welche kardanische und axiale Auslenkungen der gekuppelten Teile zulässt, mit einem Ende der Hohlwelle 3 verbunden, welche den Hohlwellenstummel 8 mit einem diese Auslenkungen zulassenden radialen Spiel durchsetzt und welche mit einem entsprechenden radialen Spiel die mit Triebrädern 12 und 12a verbundene Achse 6 des Radsatzes 4 umgibt. Das andere Ende der Hohlwelle 3 ist über eine entsprechende Kupplungseinrichtung 11a mit dem Triebrad 12a verbunden.

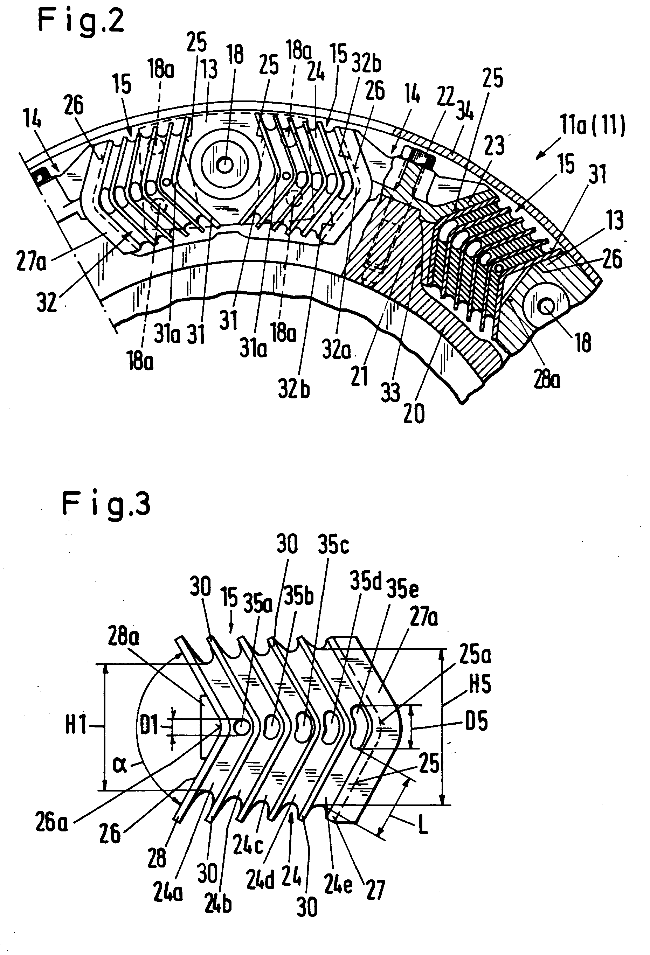

Die Kupplungseinrichtungen 11 und 11a enthalten je eine Anzahl, beim dargestellten Beispiel sieben, in Umfangsrichtung gegeneinander versetzt angeordnete erste Mitnehmerteile 13, welche mit dem einen Antriebsteil - dem Zahnrad 7 bzw. dem Triebrad 12a - verbunden sind, und eine entsprechende Anzahl mit der Hohlwelle 3 verbundene zweite Mitnehmer 14, welche je zwischen zwei der Mitnehmerteile 13 des Zahnrades 7 bzw. des Triebrades 12a eingreifen und je über zwei Federelemente 15 mit den in beiden Umfangsrichtungen benachbarten ersten Mitnehmerteilen 13 zusammenwirken (Fig. 2). Die Mitnehmerteile 13 der Kupplungseinrichtung 11 sind an einem Tragring 16 ausgebildet, der mittels Schrauben 17 an der Stirnseite des Hohlwellenstummels 8 befestigt ist. Die Mitnehmerteile 13 der Kupplungseinrichtung 11a können an einem entsprechenden Tragring oder, wie dargestellt, als einzelne Einbauteile ausgeführt und je für sich mittels Schrauben 18, 18a am Triebrad 12a befestigt sein. Die der Hohlwelle 3 zugeordneten Mitnehmerteile 14 der Kupplungseinrichtungen 11 und 11a können darstellungsgemäss auf zwei je mit einem Ende der Hohlwelle 3 verbundenen Tragringen 20 angeordnet und je durch eine vom betreffenden Tragring 20 radial abstehende zahnartige Erhebung 21 und einen auf diese von aussen her aufsetzbaren und mittels Schrauben 22 befestigbaren Halteteil 23 gebildet sein.

Die Federelemente 15 enthalten je einen winkelförmig ausgebildeten Federkörper 24 aus Gummi oder einem entsprechenden gummielastischen Material, der durch eine V-förmig abgewinkelte konvexe Stützfläche 25 und eine entsprechend abgewinkelte konkave Stützfläche 26 begrenzt ist. Die Stützflächen 25 und 26, welche durch zueinander parallele Scheitelpartien 25a bzw. 26a bestimmt sind, können an zwei je an einem Ende des Federkörpers 24 angebrachten Stützpartien, darstellungsgemäss in Form von winkelförmigen, anvulkanisierten metallischen Profilteilen 27 bzw. 28 ausgebildet sein, welche mit dem Federkörper 24 sandwichartig zu einem Einbauteil verbunden sind. Entsprechend der Darstellung nach den Figuren 2 und 3 können die Federkörper 24 je aus mehreren, darstellungsgemäss fünf, winkelförmig ausgebildeten Teilstücken 24a, 24b, 24c, 24d und 24e zusammengesetzt sein, welche über zwischen ihnen angeordnete, einvulkanisierte winkelförmige Versteifungselemente 30 miteinander sandwichartig verbunden sind. Die Versteifungselemente 30 können vorzugsweise aus Stahl bestehen, wodurch eine hohe Formbeständigkeit der Federelemente 15 erzielt wird.

Die Federelemente 15 sind in den Kupplungseinrichtungen 11 und 11a je mit parallel zur Achse 6 des Radsatzes 4 verlaufenden Scheitelpartien 25a und 25b angeordnet und unter Vorspannung sehnenartig je zwischen die Mitnehmerteile 13 und 14 einsetzbar, wobei die einander benachbarten Federelemente 15 jeweils symmetrisch zum dazwischenliegenden Mitnehmerteil 13 bzw. 14, mit je in die entgegengesetzte Umfangsrichtung weisenden Stützflächen 25 bzw. 26, angeordnet sind. Entsprechend sind die Mitnehmerteile 13 mit konvex abgewinkelten Anlegeflächen 31 für die konkaven Stützflächen 26 der Federelemente 15 ausgeführt, während die Mitnehmerteile 14 der Hohlwelle 3 mit, konkav abgewinkelten Anlegeflächen 32 für die konvexen Stützflächen 25 der Federelemente 15 ausgeführt sind. Die konkaven Anlegeflächen 32 sind je durch eine Flanke 32a der gegen die Scheitelpartie der Anlegefläche 32 sich konisch verjüngenden Erhebung 21 oder, wie in Fig. 2 dargestellt, durch einen an die Flanke 32a anlegbaren Einsetzteil 33, sowie durch eine Flanke 32b des von aussen her gegen die Erhebung 21 hin konisch sich verjüngenden Halteteils 23 gebildet. Beim dargestellten Beispiel sind die Federelemente 15 je durch zwei vom Profilteil 27 seitlich abstehende, beidseitig an den Mitnehmerteil 14 anlegbare Anschlagpartien 27a und einen am Profilteil 28 ausgebildeten, in eine Nut des Mitnehmerteils 13 einführbaren Führungsnocken 28a in axialer Richtung gehalten.

Die Kupplungseinrichtungen 11 und 11a können je einen die Mitnehmerteile 13, 14 und Federelemente 15 umgebenden Schutzring 34 enthalten, welcher bei der dargestellten Ausführung auf den einen Mitnehmerteilen 13 befestigt und im Abstand von den anderen Mitnehmerteilen 14 und den Federelementen 15 gehalten ist. Durch den Schutzring 34 kann im Falle eines Bruchs eines der Federelemente 15 ein Abschleudern von Bruchstücken verhindert werden, auf welche insbesondere bei höheren Fahrgeschwindigkeiten erhebliche Fliehkräfte einwirken. Es ist auch eine Ausführung möglich, bei der der Schutzring 34 auf den Mitnehmerteilen 14 der Hohlwelle 3 befestigt ist.

Wie insbesondere aus der Fig. 3 näher hervorgeht, können die Teilstücke 24a, 24b, 24c, 24d und 24e des Federkörpers 24 je mit einer sie mittig durchsetzenden, parallel zu den Scheitelpartien 25a und 26a verlaufenden Aussparung 35a, bzw., 35b, 35c, 35d, 35e versehen sein. Darstellungsgemäss sind die Aussparungen 35a bis 35e mit unterschiedlichen Querschnittsabmessungen (Durchmessern) D1 bis D5 ausgeführt, wobei die Querschnittsabmessung der der konvexen Stützfläche 25 jeweils näher gelegenen Aussparung 35b bzw. 35c, 35d, 35e grösser ist als die entsprechende Querschnittsabmessung der ihr gegen die konkave Stützfläche 26 hin benachbarten Aussparung 35a bzw. 35b, 35c, 35d. Die diese Aussparungen 35a bis 35e seitlich begrenzenden beschnitte der Teilstücke 24a bis 24e können mit von der konvexen Stützfläche 25 gegen die konkave Stützfläche 26 hin abnehmenden Schenkellängen L oder, wie dargestellt, mit im wesentlichen gleichen Schenkellängen L ausgeführt sein. Entsprechend bilden die Teilstücke 24a bis 24e, in Richtung parallel zu den Scheitelpartien 25a, 26a betrachtet, eine im wesentlichen konische Aussenkontur des Federkörpers 24, mit von der konkaven Stützfläche 26 gegen die konvexe Stützfläche 25 hin zunehmenden Aussenabmessungen H1 bis H5. Dadurch können, in Verbindung mit den entsprechend zunehmenden Querschnittsabmessungen (Durchmessern) D1 bis D5 der Aussparungen 35a bis 35e, seitliche Versetzungen der die Druckkräfte übertragenden Abschnitte der Teilstücke 24a bis 24e im Sinne einer Verringerung der Exzentrizität der je auf eine der durch die Aussparungen 35a bis 35e getrennten Hälften des Federelements 15 einwirkenden, einander entgegengerichteten Druckkräfte erzielt werden, durch welche die beiden Hälften je nach Art einer "schiefen Säule",im Sinne einer S-förmigen Deformation auf,Biegung beansprucht werden.

Durch geeignete, optimierte Wahl der Querschnittsabmessungen D1 bis D5 und der Aussenabmessungen H1 bis H5 können derartige, S-förmige Deformationen weitgehend unterbunden werden, wodurch eine insbesondere für die Uebertragung der Umfangskräfte sowie der Fliehkräfte günstige Beanspruchung der Federelemente 15 erzielt werden kann. Insbesondere kann jeweils eine die Dauerfestigkeit beeinträchtigende Biegebelastung der Versteifungselemente 30 um deren Scheitelpartien stark reduziert werden. Entsprechend können unter Druckkraft auftretende Biegedeformationen, insbesondere solche der mittleren Versteifungselemente 30, je um die betreffende Scheitelpartie, und damit die Gefahr eines Bruchs der Versteifungselemente 30, vermieden werden.

Durch die beschriebene Ausführung wird eine in axialer Richtung relativ weiche und in Umfangsrichtung sowie in radialer Richtung relativ harte nachgiebige Verbindung zwischen den Mitnehmerteilen 13 und 14 erzielt, welche entsprechend relativ grosse Auslenkungen der gekuppelten Teile - Zahnrad 7 und Achse 6 - in axialer und in radialer Richtung sowie in geringerem Masse in Umfangsrichtung, und kardanische Auslenkungen zulässt. Dabei können die Fliehkräfte relativ klein gehalten werden, so dass der Anwendungsbereich der Kupplungseinrichtung entsprechend erweitert wird und diese insbesondere für Antriebe schnellaufender Fahrzeuge verwendbar ist. Durch entsprechende Wahl des von den Stützflächen 25 bzw. 26 eingeschlossenen Winkels α, der Querschnittsabmessungen D1 bis D5 der Aussparungen 35a bis 35e sowie der Aussenabmessungen H1 bis H5 des Federkörpers 24 ist die Steifigkeit der Federelemente 15 in Umfangsrichtung und in radialer Richtung im Vergleich zu Lösungen ohne die beschriebenen Massnahmen - in einem wesentlich vergrösserten Bereich unabhängig von deren Steifigkeit in axialer Richtung beeinflussbar.

Durch die beschriebene winkelförmige Ausbildung und die entsprechende Anordnung der Federelemente 15 werden die über die Anlegeflächen 31, 32 und Stützflächen 26, 25 eingeleiteten Komponenten der Fliehkräfte im wesentlichen durch Druckbeanspruchung der Teilstücke 24a bis 24e des Federkörpers 24 übertragen, wobei die Formbeständigkeit der Federelemente 15 in Kombination mit geeigneter Wahl des von den Stützflächen 25 bzw. 26 eingeschlossenen Winkels α, der Querschnittsabmessungen D1 bis D5 der Aussparungen 35a bis 35e und der Aussenabmessungen H1 bis H5 auch mit Versteifungselementen 30 in Form dünner, leichter Zwischenbleche gewährleistet werden kann. Bei Ausführungen ohne Aussparungen und ohne entsprechende Anpassung der Aussenabmessungen müssen die Vesteifungselemente 30 biegesteif und somit auch dicker und schwerer als beim dargestellten Beispiel ausgebildet sein, damit keine Ermüdungsschäden durch wechselnde Umfangskräfte auftreten können. Schwerere, dickere Versteifungselemente 30 erhöhen jedoch die Fliehkräfte auf das Federelement und verlängern - bei Verwendung gleich dicker Gummischichten - das Federelement, wodurch die Formstabilität in radialer Richtung verschlechtert wird, so dass die Kupplungseinrichtung nicht mehr für grosse Drehzahlen (Fahrgeschwindigkeiten) eingesetzt werden könnte.

Die Federelemente 15 können - entsprechend der angestrebten Steifigkeit in radialer Richtung - auch mit einer grösseren oder kleineren Anzahl Versteifungselementen 30 oder - bei entsprechend geringen Abmessungen in Umfangsrichtung - ohne derartiges Versteifungselement ausgeführt sein. Es ist auch eine Ausführung möglich, bei der die Versteifungselemente 30 durch Teilstücke 24a bis 24e mit je - in der Einbaulage der Federelemente - von innen nach aussen konisch zunehmender Breite voneinander getrennt sind. Es können auch Federelemente 15 ohne metallische Stützpartien 27 und 28 ausgeführt sein und dementsprechend die Stützflächen 25 und 26 unmittelbar am Federkörper 24 ausgebildet und mit den Anlegeflächen 32 bzw. 31 zusammenführbar sein. Anstelle der dargestellten Federelemente 15 mit ebenen Stützflächen 25, 26 können auch entsprechende Federelemente mit gekrümmten (bombierten) Stützflächen, z.B. in Form von Zylindersegmenten, verwendet werden. Ferner kann anstelle einer der Kupplungseinrichtungen 11 oder 11a eine Kupplungseinrichtung anderer Art, z.B. eine Wellscheibenkupplung, verwendet werden.

## Patentansprüche

1. Antrieb für einen Radsatz (4) eines Schienentriebfahrzeuges, mit einem in einem Drehgestell gehaltenen Fahrmotor (1), einem Getriebe (2) und einer die Achse (6) des Radsatzes (4) umgebenden Kardan-Hohlwelle (3), welche über zwei radial und axial nachgiebige Kupplungseinrichtungen (11 und 11a) einerseits mit einer Hohlwelle (8) des Getriebes (2) und andererseits mit dem Radsatz (4) gekuppelt ist, wobei mindestens eine der Kupplungseinrichtungen (11, 11a) mehrere ringförmig angeordnete Federelemente (15) mit Federkörpern (24) enthält, welche je aus mindestens zwei Teilstücken (24a bis 24e) aus einem gummielastischen Material und mindestens einem dazwischen angeordneten Versteifungselement (30) gebildet sind und welche je zwischen einem mit der Kardan-Hohlwelle (3) verbundenen Mitnehmerteil (14) und einem in Umfangsrichtung benachbarten, mit der Hohlwelle (8) des Getriebes (2) bzw. mit dem Radsatz (4) verbundenen Mitnehmerteil (13) angeordnet sind, dadurch gekennzeichnet, dass die Versteifungselemente (30) der Federkörper (24) je durch einen winkelförmigen Profilteil gebildet sind, der mit den Teilstücken (24a bis 24e) zu einem winkelförmigen Einbauteil verbunden ist, welcher durch eine in die eine Umfangsrichtung weisende, zumindest annähernd V-förmig abgewinkelte konvexe Stützfläche (25) und eine in die andere Umfangsrichtung weisende, entsprechend abgewinkelte konkave Stützfläche (26) begrenzt ist, welche Stützflächen (25, 26) durch im wesentlichen parallel zueinander verlaufende Scheitelpartien (25a, 25b) bestimmt sind, dass die Teilstücke (24a bis 24e je mit einer sie parallel zu den Scheitelpartien (25a, 25b) mittig durchsetzenden Aussparung (35a bis 35e) ausgeführt sind und dass die Mitnehmerteile (14 und 13) je mit zwei entsprechend V-förmig abgewinkelten, konkaven bzw. konvexen Anlegeflächen (32 bzw. 31) für diese Stützflächen (25 bzw. 26) ausgeführt sind, wobei die einander zugekehrten Anlegeflächen (31 und 32) der jeweils in Umfangsrichtung benachbarten Mitnehmerteile (13 und 14) durch im wesentlichen parallel zur Radsatzachse (6) verlaufende Scheitelpartien (31a bzw. 32a) bestimmt sind, zwischen welche die Federelemente (15) jeweils sehnenartig einsetzbar sind.

2. Antrieb nach Anspruch 1, mit den Federkörper (24) beidenends begrenzenden Stützpartien, dadurch gekennzeichnet, dass die Stützpartien als winkelartige Profilteile (27, 28) ausgeführt sind, welche je die konvexe bzw. konkave Stützfläche (25 bzw. 26) bilden.

3. Antrieb nach Anspruch 1 oder 2, dadurch gekennzeichnet, dass die Teilstücke (24a bis 24e) als winkelförmige Profilteile ausgeführt sind.

4. Antrieb nach einem der vorangehenden Ansprüche, dadurch gekennzeichnet, dass die Aussparungen (35a bis 35e) mit unterschiedlichen Querschnittsabmessungen (D1 bis D5) ausgeführt sind, wobei die der konvexen Stützfläche (25) jeweils näher gelegene Aussparung (35b bzw. 35c, 35d, 35e) einen grösseren Durchmesser aufweist als die ihr gegen die konkave Stützfläche (26) hin benachbarte Aussparung (35a bzw. 35b, 35c, 35d) und dass die die Aussparungen (35a bis 35e) seitlich begrenzenden Abschnitte der Teilstücke (24a bis 24e) eine im wesentlichen konische Aussenkontur des Federkörpers (24), mit von der konkaven Stützfläche (26) gegen die konvexe Stützfläche (25) hin zunehmenden Aussenabmessungen (H1 bis H5), bestimmen.

5. Antrieb nach einem der vorangehenden Ansprüche, dadurch gekennzeichnet, dass die einander in Umfangsrichtung benachbarten Federelemente (15) jeweils mit paarweise entgegengesetzt gerichteten Federkörpern (24) symmetrisch zum dazwischenliegenden Mitnehmerteil (13 bzw. 14) angeordnet sind.

6. Antrieb nach Anspruch 5, dadurch gekennzeichnet, dass die zur Aufnahme der einander zugekehrten konvexen Stützflächen (25) der einander benachbarten Federelemente (15) bestimmten Mitnehmerteile (14) je durch eine vom betreffenden Teil (Hohlwelle 3) der Kupplungseinrichtung (11, 11a) radial nach aussen abstehende, gegen die Scheitelpartien (25a) der konkaven Anlegeflächen (32) konisch sich verjüngende Erhebung (21) und einen auf dieser von aussen her befestigbaren, entsprechend nach innen konisch sich verjüngenden Halteteil (23) gebildet sind.

7. Antrieb nach einem der vorangehenden Ansprüche, dadurch gekennzeichnet, dass die Federelemente (15) innerhalb eines sie umgebenden Schutzrings (34) angeordnet sind, der auf den einen Mitnehmerteilen (13) befestigt und im Abstand von den anderen Mitnehmerteilen (14) und den Federelementen (15) gehalten ist.

8. Schienentriebfahrzeug mit mindestens einem Antrieb nach einem der Ansprüche 1 bis 7.

## Claims

1. A drive for a wheelset (4) on a railway power unit, having a traction motor (1) supported in a bogie, a gear (2) and a hollow cardan shaft (3) which surrounds the axle (6) of the wheelset (4) and is coupled via two radially and axially resilient coupling equipments (11 and 11a) at one side to a hollow shaft (8) of the gear (2) and at the other side to the wheelset (4), where at least one of the coupling equipments (11, 11a) contains a number of spring elements (15) arranged in the form of a ring and having spring bodies (24) each of which is formed of at least two segments (24a to 24e) of a material having the elasticity of rubber and at least one stiffener (30) arranged between them, and which are respectively arranged between a transmitter-part (14) connected to the hollow cardan shaft (3) and a transmitter part (13) adjacent in the circumferential direction which is connected to the hollow shaft (8) of the gear (2) or respectively to the wheelset (4), characterized in that each of the stiffeners (30) of the spring bodies (24) is formed by an angular profiled part which is connected by the segments (24a to 24e) to an angular component which is bounded by a convex bearing area (25) angled at least approximately in the shape of a V pointing in the one circumferential direction, and a concave bearing area (26) angled to correspond and pointing in the other circumferential direction, the said bearing areas (25, 26) being defined by apex portions (25a, 25b) running essentially in parallel with one another, that the segments (24a to 24e) are each made with a recess (35a to 35e) passing through the middle, and that the transmitter-parts (14 and 13) are each made with two concave or resp. convex seating areas (32 resp. 31) for these bearing areas (25 resp 26), correspondingly angled in the shape of a V, the seating areas (31 and 32) next one another on the respective transmitter parts (13 and 14) adjacent in the circumferential direction being defined by apex portions (31a resp. 32a) running essentially in parallel with the axle (6) of the wheelset and between which the spring elements (15) may respectively be set after the style of chords.

2. A drive as in Claim 1, having bearer portions bounding the spring bodies (24) at the two ends, characterized in that the bearer portions are made as angular profiled parts (27, 28) which form the respective convex or concave bearing areas (25 resp. 26).

3. A drive as in Claim 1 or 2, characterized in that the segments (24a to 24e) are made as angular profiled parts.

4. A drive as in one of the preceding Claims, characterized in that the recesses (35a to 35e) are made with different cross-sectional dimensions (D1 to D5), that recess (35b resp. 35c, 35d, 35e) which is placed respectively nearer the convex bearing area (25) exhibiting a greater diameter than the recess (35a resp. 35b, 35c, 35d) next to it in the direction of the concave bearing area (26), and that the portions of the segments (24a to 24e) bounding the recesses (35a to 35e) at the sides define for the spring body (24) an outer contour which is essentially conical and has external dimensions (H1 to H5) which increase from the concave bearing area (26) towards the convex bearing area (25).

5. A drive as in one of the preceding Claims, characterized in that the spring elements (15) adjacent to one another in the circumferential direction are arranged in each case with spring bodies (24) directed opposite ways in pairs, symmetrically about the transmitter-part (13 resp 14) lying between them.

6. A drive as in Claim 5, characterized in that the transmitter-parts (14) destined to receive the convex bearing areas (25) which face one another on the adjacent spring elements (15), are respectively formed by an elevation (21) which stands up radially outwards from the part concerned (hollow shaft 3) of the coupling equipment (11, 11a) and tapers in conically towards the apex portions (25a) of the concave seating areas (32), and a holder part (23) which tapers in correspondingly inwards and may be fastened from the outside to the said elevation.

7. A drive as in one of the preceding Claims, characterized in that the spring elements (15) are arranged within a protective ring (34) which surrounds them and is fastened to the one group of transmitter-parts (13) and held clear of the other group of transmitter-parts (14) and the spring elements (15).

8. A railway power unit having at least one drive as in one of the Claims 1 to 7.

## Revendications

1. Entraînement pour un train de roues (4) d'un engin de traction ferroviaire, avec un moteur de traction (1) retenu dans un bogie, un engrenage (2) et un arbre creux de Cardan (3) entourant l'essieu (6) du train de roues (4), qui est accouplé par deux dispositifs d'accouplement cédant radialement et axialement (11 et 11a) d'une part à un arbre creux (8) de l'engrenage (2) et d'autre part au train de roues (4), au moins l'un des dispositifs d'accouplement (11, 11a) comportant plusieurs éléments de ressort (15) disposés annulairement avec des corps de ressort (24) qui sont formés respectivement par au moins deux pièces partielles (24a à 24e) en une matière ayant une élasticité de caoutchouc et au moins un élément de renforcement (30) disposé entre celles-ci et qui sont disposés respectivement entre une pièce d'entraînement (14) reliée à l'arbre creux de Cardan (3) et une pièce d'entraînement (13) avoisinante dans la direction périphérique, reliée à l'arbre creux (8) de l'engrenage (2) et, respectivement au train de roues (4), caractérisé en ce que les éléments de renforcement (30) des corps de ressort (24) sont formés respectivement par une pièce profilée angulaire qui est assemblée avec les pièces partielles (24a) à (24e) pour former une pièce angulaire à monter qui est délimitée par une surface d'appui convexe, orientée dans la direction périphérique, coudée au moins approximativement en forme de V et une surface d'appui concave (26) orientée dans l'autre direction périphérique, coudée de manière correspondante, lesdites surfaces d'appui (25, 26) étant définies par des parties de crête (25a, 25b) s'étendant essentiellement parallèlement l'une à l'autre, en ce que les pièces partielles (24a à 24e) présentent respectivement un évidement (35a à 35e) traversant celles-ci au milieu, parallèlement aux parties de crête (25a, 25b) et que les pièces d'entraînement (14 et 13) sont réalisées respectivement avec deux surface d'application concaves respectivement convexes (32, 31) coudées de manière correspondante en forme de V pour ces surfaces d'appui (25 respectivement 26), les surfaces d'application (31 et 32 ) orientées l'une vers l'autre des pièces d'entraînement (13 et 14) avoisinantes respectivement dans la direction périphérique sont définies par des parties de crête (31a respectivement 32a) s'étendant essentiellement parallèlement à l'essieu (6 du train de roues entre lesquelles les éléments de ressort (15) peuvent être placés respectivement à la manière d'une corde.

2. Entraînement selon la revendication 1, avec des parties de support délimitant le corps de ressort (24) aux deux extrémités caractérisé en ce que les parties de support sont réalisées sous forme de pièces profilées angulaires (27, 28) qui forment respectivement les surfaces de support convexe et concave (25, 26).

3. Entraînement selon la revendication 1 ou 2, caractérisé en ce que les pièces partielles (24a à 24e) sont réalisées sous forme de pièces profilées angulaires.

4. Entraînement selon l'une des revendications précédentes, caractérisé en ce que les évidements (35a à 35e) sont réalisés avec des dimensions différentes en section transversale (D1 à D5), l'évidement (35b respectivement 35c, 35d, 35e) respectivement plus proche de la surface d'appui convexe (25) ayant un plus grand diamètre que l'évidement (35a respectivement 35b, 35c, 35d) avoisinant celui-ci vers la surface d'appui concave (26), et en ce que les tronçons des pièces partielles (24a à 24e) délimitant latéralement les évidements (35a à 35e) déterminent un contour extérieur sensiblement conique du corps de ressort (24), avec des dimensions extérieures (H1 à H5) augmentant de la surface d'appui concave (26) vers la surface d'appui convexe (25).

5. Entraînement selon l'une des revendications précédentes caractérisé en ce que les éléments de ressort (15) avoisinants dans la direction périphérique sont disposés respectivement avec des corps de ressort (24) opposés par paires d'une manière symétrique à la pièce d'entraînement (13 respectivement 14) située entre ceux-ci.

6. Entraînement selon la revendication 5 caractérisé en ce que les pièces d'entraînement (14) prévues pour recevoir les surfaces d'appui convexes (25) orientées l'une vers l'autre des éléments de ressort avoisinants (15) sont formés respectivement par une surélévation (21) faisant saillie radialement vers l'extérieur de la partie concernée (arbre creux 3) du dispositif d'accouplement (11, 11a), diminuant en forme de cône vers les parties de crête (25a) des surfaces d'application concaves (32) et une pièce de retenue (23) pouvant être fixée sur celle-ci depuis l'extérieur, diminuant en cône vers l'intérieur de manière correspondante.

7. Entraînement selon l'une des revendications précédentes caractérisé en ce que les éléments de ressort (15) sont disposés à l'intérieur d'une bague de protection (34) entourant ceux-ci, qui est fixée sur l'une des pièces d'entraînement (13) et qui est tenue à une certaine distance des autres pièces d'entraînement (14) et des éléments de ressort (15).

8. Véhicule moteur ferroviaire comportant au moins un entraînement selon l'une des revendications 1 à 7.
